# EUROPEAN PATENT SPECIFICATION

(11) **EP 1 133 921 B1**
(45) Date of publication and mention of the grant of the patent: **11.02.2004**
(21) Application number: 01200915.5
(22) Date of filing: 09.03.2001
(51) Int. Cl.: A23C 19/032, A23C 19/068

(54) **Goat cheese of the semi-hard type**
Ziegenschnittkäse
Fromage de chèvre à pâte demi-dure

(30) Priority: 17.03.2000 NL 1014682
(43) Date of publication of application: 19.09.2001
(73) Proprietor: Campina Melkunie B.V. Kaasgroep, 5015 BH Tilburg (NL)
(72) Inventor: Burghout, Herman Frank, 5241 XT Rosmalen (NL); Van Hekezen, Marie Adriana, 5262 ML Vught (NL)
(74) Representative: du Pont, Jeroen

(56) References cited:
- G. MOATSOU: "Effect of starters on proteolysis of Graviera Kritis cheese" LE LAIT, vol. 79, no. 3, 1999, pages 303-315, XP000964784
- I. KANDARAKIS: "Effect of starters on gross and microbiological compositionand organoleptic characteristics of Graviera Kritis cheese" LE LAIT, vol. 78, 1998, pages 557-558, XP000965556
- P. FOX: "Cheese Vol.2" 1996 , CHAPMAN & GALL , LONDON XP002153986 * page 533 - page 537; table XXXIII *
- AN.: "Nieuwe Nederlandse geitenkaas" VOEDINGSMIDDELENTECHNOLOGIE, vol. 21, no. 20, 1988, page 41 XP002153985
- REQUENA T ET AL: "EVALUATION OF A SPECIFIC STARTER FOR THE PRODUCTION OF SEMI-HARD GOAT'S MILK CHEESE" LAIT,PARIS,FR, vol. 72, no. 5, 1992, pages 437-448, XP000964982 ISSN: 0240-8880

## Description

The present invention relates principally to goat cheese of the semi-hard type.

Many so-called goat cheeses are known in the prior art, both fresh and ripened goat cheese (F.V. Kosikowski pp. 346-367). Fresh goat cheese is for example "Chavraux" (the pyramid-shaped cheese) and "Bûche's". Ripened goat cheese is for example "Sainté Maure" and "Tome de Romans". In the Netherlands a semi-hard goat cheese with the name "Arina" is made using the Gouda cheesemaking process.

"Nieuwe Nederlandse geitenkaas" [New Dutch Goat Cheese] (Voedingsmiddelentechnologie, volume 21, No. 20, 1988, page 41) describes a semi-hard goat cheese which is made exclusively from goat milk and contains 48% fat and 2.5% salt based on dry matter.

T. Requena ("Evaluation of a specific starter for the production of semi-hard goat's milk cheese", LAIT, PARIS, FR, volume 72, No. 5, 1992, pages 437-448) describes the preparation of a goat cheese.

The present invention provides a novel goat cheese of the semi-hard type which contains at least 1000 ppm propionic acid.

Surprisingly it has been found that a goat cheese of this kind has both the characteristic goat cheese taste and the specific sweet and nutty taste of "Swiss type" cheese. "Swiss type" cheeses are described for example in F. Kosikowski, "Cheese and fermented milk foods", Second Edition, 1982, published by F.V. Kosikowski and Associates, New York, pp. 261-290. In the prior art there is no semi-hard goat cheese with such a relatively high propionic acid content.

From the food science point of view the use of goat milk for the production of semi-hard goat cheese has important advantages relative to other types of milk, such as easy digestibility for example.

A semi-hard, Edam-type cheese containing 90-220 ppm propionic acid which is prepared from goat milk is known per se from P. Fox ("Cheese Vol. 2", 1996, Chapman & Gall, London, pages 533-537, Table XXXIII). This goat cheese does not have the surprising taste of the goat cheese according to the present invention.

Goat cheese according to the prior art generally does not have holes, such as for example those which are found in Emmenthal cheese. The goat cheese according to the invention can be prepared in such a manner that it has the characteristic holes, by suitably selecting the fat and moisture contents.

According to the invention, the term "goat cheese" is intended to mean any cheese which has both the characteristic taste of goat cheese and also the specific sweet and nutty taste of "Swiss-type" cheese. It will be clear to the person skilled in the art that it is not necessary to use 100% goat milk as the cheese milk for preparation of the goat cheese according to the invention. For various reasons, it may be desirable to adjust the percentage by volume of goat milk as desired; this percentage by volume may then if appropriate be topped up with other types of milk. In practice, cow milk is used in particular for this purpose (for example at least 50% by volume goat milk topped up with cow milk), since cow milk has little effect on the taste of the goat cheese. If, for example, sheep. milk is used as additional milk, in practice a higher percentage by volume of goat milk will be used in the milk for the cheese, advantageously at least 70% by volume, more advantageously at least 80% by volume goat milk.

The goat cheese is preferably prepared using cheese milk which contains at least 50% by volume, preferably at least 70% by volume, more preferably 80% by volume goat milk. The goat cheese is prepared in particular using cheese milk which substantially comprises goat milk.

In other words, the percentage by volume of goat milk can be adjusted as desired and can if necessary be supplemented with other types of milk, including cow milk, ewe milk, buffalo milk, etc.

It has been found that the appearance of the cheese according to the invention can be considerably improved by reducing the fat content of the cheese on a dry matter basis. Eye formation is improved and cracking almost completely eliminated by reducing the fat content. Cracking is in practice a phenomenon which is usually unwanted. In particular the cheese has a fat content on a dry matter basis of less than 55% by weight, preferably 45-55% by weight and more preferably 48-50% by weight.

The consistency of goat cheese can be characterized by a so-called "short body". In other words, an elongated piece of goat cheese can only be bent through a small radius of curvature before it breaks. Cracking is counteracted by reducing the fat content, but in practice the cheese with reduced fat content may make a noise during chewing, so-called "squeaking". Squeaking is also associated with an unwanted disagreeable mouthfeel. All this can be improved by adjusting the moisture content of the cheese. The cheese preferably has a moisture content of 30-60% by weight, more preferably 42-50% by weight and most preferably 44-49% by weight.

The goat cheese of the semi-hard type according to the invention can be made in many different ways. The invention also provides a method for making goat cheese of the semi-hard type which contains at least 1000 ppm propionic acid, comprising at least the steps of:
- clotting the cheese milk using rennet and one or more starter cultures for propionic acid fermentation;
- separating the whey and curd;
- pressing the curd;
- ripening the cheese,
the cheese milk containing at least 50% by volume goat milk.

In this way, a cheese of the semi-hard type according to the invention can be prepared in a suitable way. In particular, the invention uses cheese milk which contains at least 70% by volume, preferably 80% by volume and most preferably substantially 100% by volume goat milk.

Rennet means any rennet known in the prior art, both microbial rennet and abomasal rennet and other preparations containing chymosin.

Apart from the propionic acid fermentation starter cultures, mesophilic and/or thermophilic bacterial cultures are usually also employed. The starter cultures for propionic acid fermentation are chosen with advantage from *Propionibacterium freudenreichii* and *Propionibacterium shermanii*.

The fat content of the goat milk is preferably reduced and in particular the fat content of the goat milk is reduced in such a way that the cheese contains 45-55% by weight fat and more preferably 48-50% by weight fat on a dry matter basis.

The fat content of the goat milk can be reduced in various ways. Part of the cream can be removed by centrifuging, for example.

It is furthermore preferable to adjust the moisture content of the goat cheese to 30-60% by weight, preferably 42-50% by weight and more preferably 44-49% by weight. The moisture content of the cheese can be adjusted by controlling the clotting temperature and scalding temperature.

The advantages of reducing the fat content and adjusting the moisture content will become even clearer below in the examples.

It has been found that in the production of semi-hard goat cheese according to the invention the effect of nitrate is less effective against the growth of butyric acid bacteria spores (e.g. *Clostridium tyrobutyricum*). Lysozyme, on the other hand, works very well. There are also other ways of preventing spores of butyric acid bacteria getting into the milk, for example by very high hygiene during milking, bactofugation or microfiltration of the cheese milk. In that case the use of lysozyme can even be completely dispensed with.

In the method according to the invention it is of course possible to apply all the standard additional production steps, or the addition of other ingredients, provided that the cheese milk comprises goat milk.

Apart from rennet and starter cultures, calcium chloride or other standard ingredients can also be added, for example.

After the pressing of the curd, the cheese is in practice often put into a brine bath for a certain time in order to control the salt content of the cheese.

The cheese milk can also be skimmed beforehand, the cream removed being used to adjust the fat content of the milk. The milk can also be pasteurized or homogenized, prior to cheesemaking.

The salt content of the cheese according to the invention, on a dry matter basis, will in practice be 1-4% by weight, preferably 2-3% by weight and more preferably 2.2-2.7% by weight.

After brining, the pH of the cheese will in practice be between 5.10 and 5.60, preferably between 5.35 and 5.50 and most preferably between 5.40 and 5.45.

The cheese according to the invention will in practice contain at least 1000 ppm propionic acid. This means in practice a propionic acid content on consumption between 1000 and 7000 ppm, more preferably between 1500 and 6500 ppm and most preferably between 2000 and 4000 ppm.

The invention will be explained in greater detail below by means of a number of examples. Percentages are percentages by weight unless specifically otherwise indicated.

### Example 1

Starter (mesophilic lactic acid bacteria and *Lactobacillus bulgaricus*), propionic acid bacteria (including *Propionibacterium freudenreichii*), CaCl₂, lysozyme and microbial rennet were added to 350 litres of raw full-fat goat milk. Curd was then produced in the usual way at a temperature of 32°C. After cutting the gel formed, whey was drawn off and warm water was added to wash the curd, bringing the temperature to 36°C. After drawing off whey again, the curd was pressed into blocks in a mould, giving a cheese of about 4.5 kg. The cheese was brined to ± 2.5% salt on a dry matter basis. The cheese was then ripened for 14 days after pressing at 13°C and subsequently at 18°C, the cheese being regularly turned and coated until the cheese had sufficiently large eyes.

This white cheese had a special taste which was a combination of the sweet and nutty taste of Emmental and goat cheese. The taste was somewhat creamier than desired, however. The consistency was softer, more malleable and shorter than Emmental. The cut surface was considered poor because of the presence of cracks. Table 1 below gives the composition of the cheese after brining and the propionic acid content when tested and judged for this example and for the following examples.

### Example 2

A mixture of 300 litres of full-fat goat milk and 50 litres of skimmed cow milk was subjected to heat treatment by means of holder pasteurization (30 min, 65°C) and was then cooled. Cheese was made from this in the same way as in Example 1. Calf rennet was used instead of microbial rennet and the curd was put into cheese moulds in such a way that the cheese had a weight of 8 kg after brining. This cheese was less creamy but otherwise had a comparable taste to the cheese from Example 1. The consistency of this cheese was comparable to the consistency of Emmenthal, but had a somewhat shorter structure as a result of the use of goat milk. The cut surface showed cracks.

### Example 3

2000 litres of partially skimmed goat milk were pasteurized for 15 s at 73°C. Cheeses of ± 12 kg were then made in the same way as in Example 2, with a fat content of 45% on a dry matter basis after brining. Unlike Examples 1 and 2, which had followed the usual pattern of ripening, this cheese was ripened for 4 weeks at 13°C and then at 18°C until the eyes were sufficiently large. This cheese had a comparable taste to the cheese from Example 2, but it was found that during chewing this cheese 'squeaked'. As a result of the longer ripening time at 13°C, very big cracks were visible on the cut surface.

### Example 4

25 kg of skimmed milk powder from cow milk were added to 2000 litres of continuous-flow pasteurized full-fat goat milk, and cheese was made from this as in Example 2. An unattractively large number of eyes of too small size were observed on the cut surface, however.

### Example 5

3% whey cream from cow milk was added to 2000 litres of full-fat goat milk. The cheese milk was pasteurized by a continuous flow process and cheese was made as in Example 2. The cheese was very creamy and very soft. The cut surface showed the same picture as in Example 4.

### Example 6

In the same way as in Example 2, cheese was made from 2000 litres of goat milk, to which 25 kg of skimmed milk powder and 3% whey cream from cow milk had been added. The cheese had a comparable taste to the cheese in Example 4. The consistency, however, was softer, more malleable and less elastic than in Example 4, but less extreme than in Example 5. A large crack was occasionally observed on the cut surface.

### Example 7

2000 litres of goat milk were standardized until the fat content of the cheese on a dry matter basis was 49%. Cheese was then made in the way described in Example 2, with pasteurization for 15 s at 72°C. This cheese had the desired taste and consistency. The cut surface did not show any cracking and had excellent eyes.

### Example 8

Cheese was made in the same way as in Example 7, but with a lower scalding temperature (34°C). This cheese was considered to be more bitter than the cheese from Example 7. The cut surface showed some very small cracks. The consistency was too soft and malleable.

### Example 9

After continuous-flow pasteurization, 2500 litres of standardized goat milk were processed to cheese in the same way as in Example 2, with a clotting temperature of 31°C and a scalding temperature of 37°C. The cheese was pressed in a rectangular mould to a cheese of 12 kg. This cheese was packaged in film after brining and ripened in the usual way. This cheese had a fairly flat taste and a somewhat softer consistency than Example 7, and the eyes were somewhat too small.

**Table 1:**

| Composition and organoleptic assessment after ripening of cheese according to the invention. | | | | | | | | |
|---|---|---|---|---|---|---|---|---|
| Ex. | pH after brining | moisture % after brining | fat % in DM after brining | salt % in DM after brining | propionic acid mg/kg on testing | taste*) | consis tency*) | cut surface*) |
| 1 | 5.36 | 44.4 | 54.7 | 2.6 | 4295 | ± | + | -- |
| 2 | 5.31 | 44.6 | 49.8 | 2.4 | 3721 | + | + | - |
| 3 | 5.44 | 43.4 | 45.8 | 2.5 | 6426 | + | - | -- |
| 4 | 5.26 | 45.9 | 50.8 | 2.5 | 1609 | + | + | ± |
| 5 | 5.19 | 43.5 | 57.5 | 2.5 | 2626 | ± | -- | ± |
| 6 | 5.23 | 45.7 | 54.3 | 2.4 | 3232 | + | - | - |
| 7 | 5.47 | 44.9 | 49.7 | 2.2 | 2390 | ++ | ++ | ++ |
| 8 | 5.29 | 48.4 | 49.2 | 2.3 | 3674 | ± | - | ± |
| 9 | 5.44 | 42.3 | 49.5 | 2.3 | 3375 | - | + | + |

| | | | | | | | | |
|---|---|---|---|---|---|---|---|---|
| 5 *) -- = very poor; - = poor; ± = neutral; + = good; ++ = very good. | | | | | | | | |

## Claims

1. Goat cheese of the semi-hard type which contains at least 1000 ppm propionic acid.

2. Goat cheese according to Claim 1, **characterized in that** the goat cheese is prepared using cheese milk which comprises at least 50% by volume, preferably at least 70% by volume, more preferably at least 80% by volume goat milk.

3. Goat cheese according to claim 2, **characterized in that** the cheese milk substantially comprises goat milk.

4. Goat cheese according to one or more of the preceding claims, **characterized in that** the cheese has a fat content on a dry matter basis of less than 55% by weight, preferably 45-55% by weight and more preferably 48-50% by weight.

5. Goat cheese according to claim 4, **characterized in that** the cheese has a moisture content of 30-60% by weight, preferably 42-50% by weight and more preferably 44-49% by weight.

6. Method for making goat cheese of the semi-hard type which contains at least 1000 ppm propionic acid, comprising at least the steps of:
- clotting the cheese milk using rennet and one or more starter cultures for propionic acid fermentation;
- separating the whey and curd;
- pressing the curd;
- ripening the cheese,
the cheese milk containing at least 50% by volume goat milk.

7. Method according to claim 6, **characterized in that** the one or more starter cultures are chosen from Propionibacterium freudenreichii and Propionibacterium shermanii.

8. Method according to claim 6 or 7, **characterized in that** the fat content of the goat milk is reduced.

9. Method according to claim 8, **characterized in that** the fat content of the goat milk is reduced in such a way that the cheese contains 45-55% by weight fat and preferably 48-50% by weight fat on a dry matter basis.

10. Method according to claim 9, **characterized in that** the moisture content of the cheese is adjusted to 30-60% by weight, preferably to 42-50% by weight and more preferably to 44-49% by weight.

11. Method according to one or more of claims 6-10, **characterized in that** the pressed curd is brined and is then packaged in a film, preferably a plastic film.

## Patentansprüche

1. Ziegenkäse des halbfesten Typs, der wenigstens 1000 ppm Propionsäure enthält.

2. Ziegenkäse nach Anspruch 1, **dadurch gekennzeichnet, dass** der Ziegenkäse unter Verwendung von Käsemilch zubereitet wird, die wenigstens 50 Vol.-%, vorzugsweise wenigstens 70 Vol.-% und stärker bevorzugt wenigstens 80 Vol.-% Ziegenmilch enthält.

3. Ziegenkäse nach Anspruch 2, **dadurch gekennzeichnet, dass** die Käsemilch im Wesentlichen Ziegenmilch enthält.

4. Ziegenkäse nach einem der vorhergehenden Ansprüche, **dadurch gekennzeichnet, dass** der Käse einen Fettgehalt auf Trockenmassebasis von weniger als 55 Gew.-%, vorzugsweise 45-55 Gew.-% und stärker bevorzugt 48-50 Gew.-% besitzt.

5. Ziegenkäse nach Anspruch 4, **dadurch gekennzeichnet, dass** der Käse einen Feuchtigkeitsgehalt von 30-60 Gew.-%, vorzugsweise 42-50 Gew.-% und stärker bevorzugt 44-49 Gew.-% besitzt.

6. Verfahren zum Herstellen von Ziegenkäse des halbfesten Typs, der wenigstens 1000 ppm Propionsäure enthält, das wenigstens die folgenden Schritte umfasst:
- Gerinnenlassen der Ziegenmilch unter Verwendung von Lab und einer oder mehrerer Säureweckkutturen für die Propionsäure-Fermentierung;
- Trennen der Molke und des Milchgerinnsels;
- Pressen des Milchgerinnsels;
- Reifenlassen des Käses,
wobei die Käsemilch wenigstens 50 Vol.-% Ziegenmilch enthält.

7. Verfahren nach Anspruch 6, **dadurch gekennzeichnet, dass** die eine oder die mehreren Säureweckkulturen aus Propionibakterium freudenreichii und Propionibakterium shermanii gewählt sind.

8. Verfahren nach Anspruch 6 oder 7, **dadurch gekennzeichnet, dass** der Fettgehalt der Ziegenmilch reduziert ist.

9. Verfahren nach Anspruch 8, **dadurch gekennzeichnet, dass** der Fettgehalt der Ziegenmitch in der Weise reduziert ist, dass der Käse 45-55 Gew.-% Fett und vorzugsweise 48-50 Gew.-% Fett auf Trockenmassebasis enthält.

10. Verfahren nach Anspruch 9, **dadurch gekennzeichnet, dass** der Feuchtigkeitsgehalt des Käses auf 30-60 Gew.-%, vorzugsweise auf 42-50 Gew.-% und stärker bevorzugt auf 44-49 Gew.-% eingestellt ist.

11. Verfahren nach einem oder mehrere der Ansprüche 6-10, **dadurch gekennzeichnet, dass** das gepresste Milchgerinnsel in Salzlauge eingelegt und dann in Folie, vorzugsweise Kunststofffolie, verpackt wird.

## Revendications

1. Fromage de chèvre du type demi-dur, qui contient au moins 1 000 parties d'acide propionique par million

2. Fromage de chèvre suivant la revendication 1, **caractérisé en ce que** le fromage de chèvre est préparé en utilisant du pré-fromage qui comprend au moins 50 % en volume et, de préférence au moins 70 % en volume et, mieux encore, au moins 80 % en volume de lait de chèvre.

3. Fromage de chèvre suivant la revendication 2, **caractérisé en ce que** le pré-fromage comprend essentiellement du lait de chèvre.

4. Fromage de chèvre suivant l'une ou plusieurs des revendications précédentes, **caractérisé en ce que** le fromage a une teneur en matière grasse, sur la base en matière sèche, de moins de 55 % en poids, de préférence de 45 à 55 % en poids et, mieux encore, de 48 à 50 % en poids.

5. Fromage de chèvre suivant la revendication 4, **caractérisé en ce que** le fromage a une teneur en humidité de 30 à 60 % en poids, de préférence de 42 à 50 % en poids, et mieux encore, de 44 à 49 % en poids.

6. Procédé de production de fromage de chèvre du type demi-dur, qui contient au moins 1 000 parties d'acide propionique par million, comprenant au moins les stades de :
- caillage du pré-fromage en utilisant de la présure et une ou plusieurs cultures starter de fermentation d'acide propionique ;
- séparation du lactosérum et du caillé ;
- pressage du caillé ;
- mûrissement du fromage ;
- le pré-fromage contenant au moins 50 % en volume de lait de chèvre.

7. Procédé suivant la revendication 6, **caractérisé en ce que** l'on choisit l'une ou plusieurs des cultures starter parmi propionibacterium freudenreichii et propionibacterium shermanii.

8. Procédé suivant la revendication 6 ou 7, **caractérisé en ce que** l'on réduit la teneur en matière grasse du lait de chèvre.

9. Procédé suivant la revendication 8, **caractérisé en ce que** l'on réduit la teneur en matière grasse du lait de chèvre de façon à ce que le fromage contienne de 45 à 55 % en poids de matière grasse et, de préférence, de 48 à 50 % en poids de matière grasse sur une base en matière sèche.

10. Procédé suivant la revendication 9, **caractérisé en ce que** l'on règle la teneur en humidité du fromage entre 30 et 60 % en poids, de préférence entre 42 et 50 % en poids et, mieux encore, entre 44 et 49 % en poids.

11. Procédé suivant une ou plusieurs des revendications 6 à 10, **caractérisé en ce que** l'on soumet le caillé pressé à un saumurage, puis on l'emballe dans un film de préférence dans un film en matière plastique.
